# FASCICULE DE BREVET EUROPEEN

(11) **EP 0 739 286 B1**
(45) Date de publication et mention de la délivrance du brevet: **23.07.1997**
(21) Numéro de dépôt: 95907048.3
(22) Date de dépôt: 19.01.1995
(51) Int. Cl.: B62D 1/26

(54) **BRAS PERFECTIONNE D'AUTOGUIDAGE D'UN VEHICULE ROUTIER LE LONG D'UN RAIL DIRECTEUR**
SELBSTLENKUNGSARM EINES STRASSENFAHRZEUGS ENTLANG EINER LEITSCHIENE
IMPROVED ARM FOR AUTOMATICALLY GUIDING A ROAD VEHICLE ALONG A GUIDE RAIL

(30) Priorité: 20.01.1994 FR 9400732
(43) Date de publication de la demande: 30.10.1996
(73) Titulaire: LOHR INDUSTRIE, 67980 Hangenbieten (FR)
(72) Inventeur: LOHR, Robert, F-67980 Hangenbieten (FR)
(74) Mandataire: Metz, Paul
(86) Numéro de dépôt international: FR9500057
(87) Numéro de publication internationale: WO9519904

(56) Documents cités:
- EP-A- 0 062 370
- DE-A- 1 455 512
- DE-B- 1 128 765
- DE-B- 1 161 157
- FR-A- 514 718
- FR-A- 2 129 052

## Description

La présente invention se rapporte à un bras de guidage perfectionné pour le guidage automatique d'un véhicule routier le long d'un rail directeur.

Le déposant a proposé une solution de base dans la demande antérieure WO-A-9427854 se rapportant à un ensemble d'autoguidage d'un véhicule le long d'un rail directeur.

Pour mieux comprendre le présent perfectionnement, on décrira ci-après la réalisation antérieure proposée par le déposant.

L'ensemble d'autoguidage précédemment breveté comprend un bras de guidage relevable monté articulé sur l'extrémité du châssis d'un véhicule routier. Ce bras de guidage présente à son extrémité avant une tête de guidage équipée de moyens de roulement pour suivre un rail directeur dispose sur une chaussée au fond d'une gorge.

Ce bras de guidage est monté articulé sur une structure d'extrémité avant du châssis autour de deux axes de pivotement croisés, d'une part un axe de basculement permettant le relevage et d'autre part un axe de pivotement vertical autorisant des mouvements directionnels.

Le bras présente un corps formé de deux chapes longitudinales juxtaposées actionné en mouvements de levage et d'abaissement par un vérin articulé.

L'extrémité avant des chapes porte une tête de guidage équipée de moyens de roulement constitués de deux galets accouplés, disposés en "V", à pointe dirigée vers le bas, réunis en prise sur le rail selon une inclinaison fixe.

Un support chasse-pierre précède et protège la tête de guidage.

On connaît par la publication de brevet DE-A-1455512 KUCH un dispositif de guidage automatique à galets d'un véhicule terrestre le long d'un rail directeur. Ce dispositif présente un chariot pivotant autour d'un axe vertical central, ce chariot étant formé d'un châssis présentant à chacune de ses extrémités un couple de galets de guidage inclinés en "V" à pointe dirigée vers le bas en prise chacun par leur gorge sur un des épaulements du rail directeur. Ce dispositif constitue un organe de commande directionnelle relié en liaison fonctionnelle par des biellettes avec la direction du véhicule et articule au châssis par un axe central de pivotement à débattement vertical. Les galets de guidage de chaque couple sont portés par des supports porte-galet conférant aux galets un caractère pivotant en inclinaison l'un par rapport à l'autre. Un mécanisme de libération des galets de leur contrainte en rapprochement est en outre prévu.

Selon une des caractéristiques essentielles de cette invention, il existe toujours deux couples de galets montés à l'extrémité d'un chariot. Ces couples sont donc reliés rigidement entre eux par un châssis et sensiblement éloignés l'un de l'autre. Cette caractéristique limite considérablement la valeur du rayon minimal de courbure acceptable pour le véhicule autoguidé. Cette limitation à des courbes de faible rayon de courbure est pénalisante dans le domaine des transports en commun urbains dont les circuits présentent fréquemment, notamment au centre des villes des virages à fort rayon de courbure.

Par ailleurs, le dispositif de rappel en libération des galets disposé sous le véhicule est difficilement accessible et n'est manoeuvrable que manuellement. Il est vrai que celui-ci est destiné à un usage occasionnel lors de l'entretien ou des réparations du véhicule. De plus, il n'existe aucun fonctionnement automatique de mise en prise des galets sur le rail.

Il s'avère que l'invention KUCH ne permet pas de relever les galets en marche et bien entendu, cette manoeuvre ne peut être automatisée. Cette impossibilité pour les galets de se relever en marche et ainsi de se dégager du rail, ne permet pas au véhicule de passer successivement et simplement d'un tronçon de trajet en mode guidé à un tronçon en guidage manuel et inversement.

La présente invention a pour but de fournir un bras perfectionné dans lequel les galets disposés également en "V" sont articulés entre eux à pivotement et dans lequel un dispositif assure automatiquement la mise en prise et le pincement des galets sur les rails ou la libération automatique de ceux-ci en pivotement d'écartement dans une phase initiale préalable à la montée au bras. Ce but est atteint grâce à un bras relevable tel que défini dans la revendication 1. Ce dispositif assure aussi le verrouillage automatique en position de travail de la tête de guidage et des galets sur les rails. Il est réglé pour provoquer un léger serrage en pincement des galets après la prise de contact sur le rail.

Par ailleurs, un ensemble articulé du type à parallélogramme déformable est actionné par le vérin. Celui-ci commande l'ensemble des fonctions dont le relevage du bras ou sa mise en place en position de travail et le mouvement de rapprochement des galets et leur libération.

Divers avantages spécifiques de grande importance viennent s'ajouter aux avantages généraux déjà mentionnés dans la demande antérieure.

La constitution des galets permet d'absorber le faible écart dû au léger déport dans les courbes.

Le dispositif de commande en rapprochement des galets et leur libération assure des mouvements précis et rapides de levage et d'abaissement du bras ainsi qu'un engagement et un échappement du rail de façon nette.

Le dispositif de serrage et de desserrage automatique de la prise mécanique des épaulements des rails avec verrouillage complète le fonctionnement automatique d'ensemble du système directionnel d'autoguidage et évite un déraillement fortuit, par exemple, consécutif à des secousses importantes.

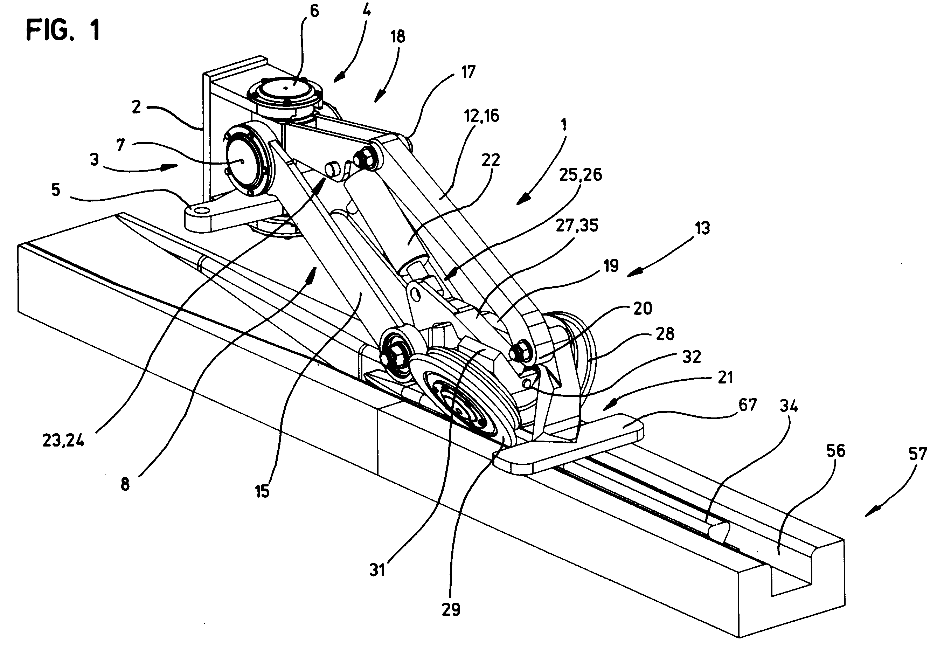

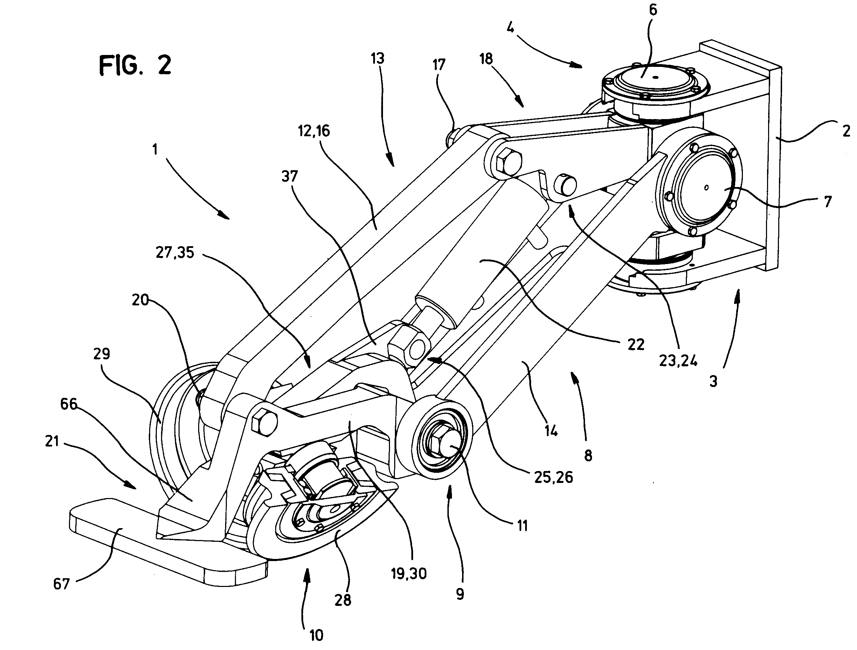

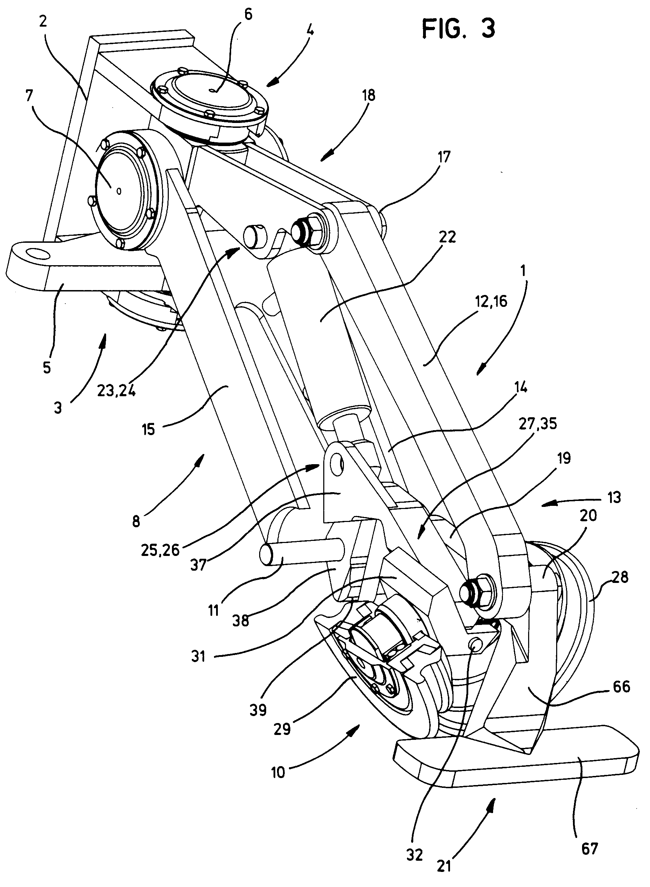

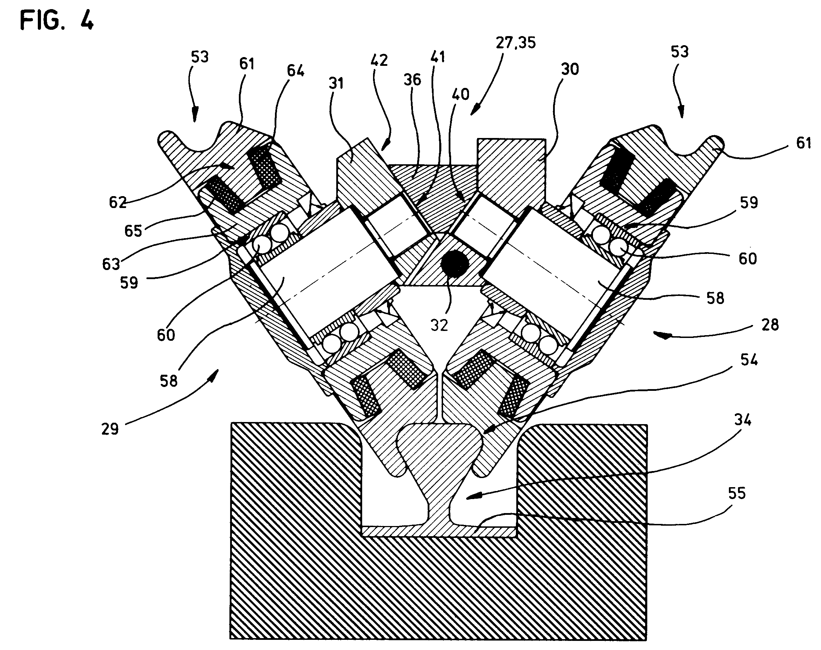

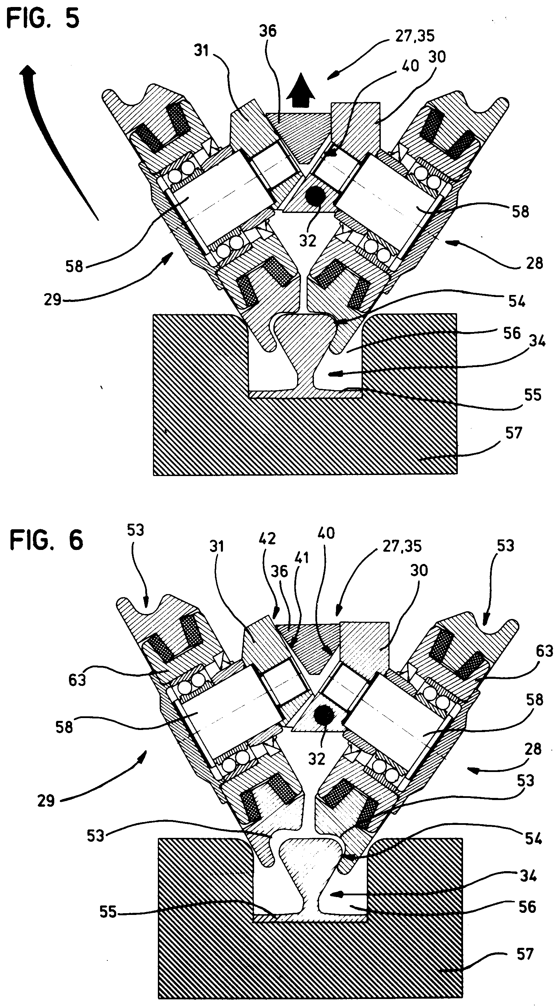

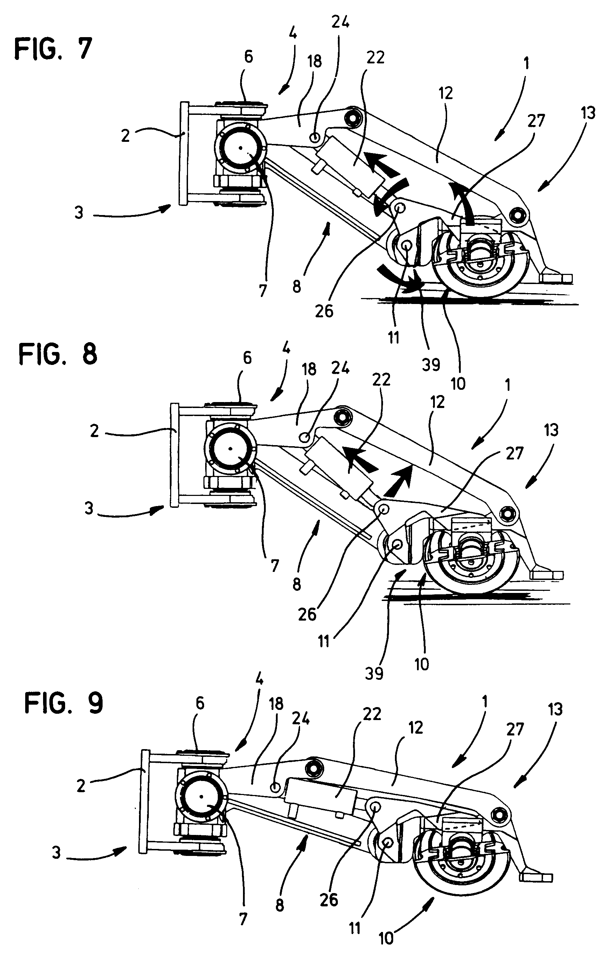

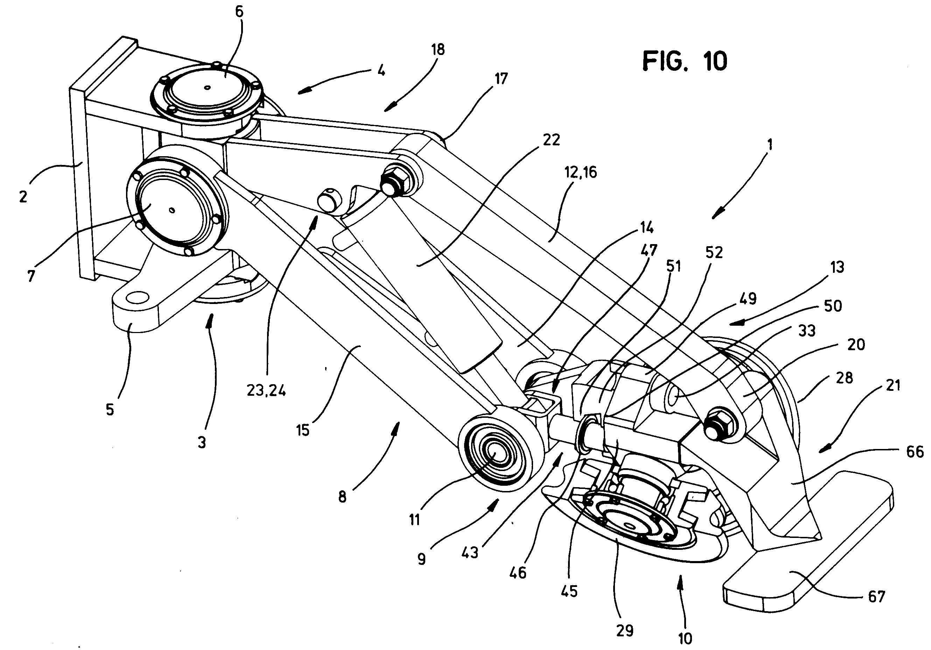

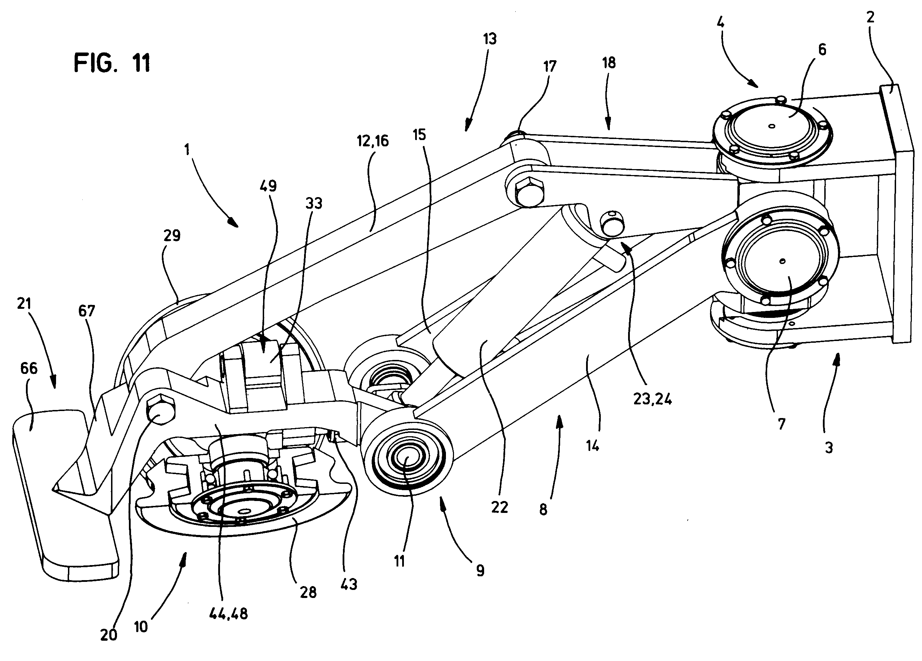

Les caractéristiques techniques et d'autres avantages de l'invention sont consignés dans la description qui suit, effectuée à titre d'exemple non limitatif sur un mode d'exécution en référence aux dessins accompagnants dans lesquels :
. la figure 1 est une vue générale en perspective du bras d'autoguidage perfectionné engagé sur un rail directeur,
. la figure 2 est une vue en perspective d'ensemble de l'avant en oblique côté droit avec brisure sur l'un des galets,
. la figure 3 est une vue en perspective d'ensemble de l'avant en oblique côté gauche avec brisure sur l'un des galets,
. la figure 4 est une vue en coupe transversale du couple de galets de guidage dans leur position de travail, c'est-à-dire en roulage sur le rail directeur,
. les figures 5 et 6 sont des vues en coupe transversale du couple de galets de guidage illustrant la montée de la pièce d'inclinaison conformée en coin pour la libération des supports des galets de guidage,
. les figures 7, 8 et 9 sont des vues de profil illustrant les positions des éléments articulés dans les principales phases de la cinématique du bras,
. la figure 10 est une vue en perspective du côté gauche montrant en perspective une réalisation à pièce d'actionnement conique,
. la figure 11 est une vue en perspective du côté droit montrant en perspective une réalisation à pièce d'écartement conique.

Le bras relevable perfectionné d'autoguidage selon l'invention constitue l'organe sensible directionnel le long d'un rail directeur d'un système de direction à guidage automatique.

Dans ce système de direction avec autoguidage, la fonction de capteur directionnel est assurée par un bras de guidage 1 monté articulé à la cardan sur un support d'extrémité 2 du châssis d'un véhicule routier constituant un centre d'articulation 3 formé d'un bloc-pivot 4 prolongé latéralement par un levier de commande directionnelle 5. Le bloc-pivot est monté pivotant autour d'un axe vertical 6 de direction et d'un axe horizontal 7 de basculement traversant le corps du bloc-pivot 4 sur lequel s'appuie le bras de guidage 1 pour ses mouvements verticaux d'abaissement et de levage.

Le bras de guidage 1 affecte la forme d'un corps rectiligne allongé en cadre articulé déformable constitué de plusieurs branches de longueur constante articulées à deux axes de pivotement de hauteur fixe et articulées entre elles dont une branche inférieure et une branche supérieure qui sont réunies entre elles, d'une part à l'avant par une branche d'extrémité et à l'arrière par une branche fixe dans le plan de relevage du bras. Le bras est formé d'abord d'une structure oblique inférieure de longueur constante 8 articulée à pivotement par son extrémité supérieure au bloc-pivot 4 par l'axe horizontal de basculement 7 et par son extrémité inférieure 9 au corps mécanique d'une tête de guidage 10 autour d'un axe inférieur de pivotement 11. La tête de guidage 10 forme la branche d'extrémité. Le cadre est formé ensuite de la branche supérieure sous la forme d'un bras articulé de liaison 12, destiné à constituer avec la structure oblique inférieure 8 et d'autres éléments dont la branche d'extrémité, le cadre d'extrémité déformable appelé ci-après ensemble articulé déformable 13 du type parallélogramme déformable.

La structure oblique inférieure 8 est constituée de deux bielles obliques parallèles 14 et 15 alors que le bras de liaison 12 est formé d'un levier central 16 articulé à pivotement d'une part par un axe de pivotement supérieur 17 à une fourche supérieure 18 et d'autre part à un bloc mécanique de liaison 19 par un axe avant de pivotement 20. Le bloc mécanique de liaison 19 se prolonge à l'avant par un chasse-pierre 21 et s'étend à l'arrière jusqu'à l'axe inférieur de pivotement 11 qu'il porte et sur lequel s'articulent les bielles obliques 14 et 15. Cette unité constitue l'ensemble articulé 13 déformable sous l'action d'un vérin d'actionnement 22 monté articulé à chacune de ses extrémités. L'extrémité supérieure 23 du vérin 22 est articulée à pivotement sur la fourche supérieure 18 au voisinage de son extrémité libre par un axe de pivotement 24 et l'extrémité inférieure 25 du vérin 22 est articulée à pivotement par un axe 26 sur une pièce d'actionnement 27 d'un dispositif de commande en inclinaison pour la mise en prise ou la libération des galets de leur emprise sur le rail directeur.

Le dispositif de commande en inclinaison des galets assure automatiquement à partir des mouvements de poussée ou de traction du vérin d'actionnement 22, par l'intermédiaire d'une pièce d'inclinaison 27 mobile par rapport à la tête de guidage, la libération ou le rapprochement des galets de guidage ainsi que la position autoverrouillée de fin de course.

On examinera maintenant plus en détail les moyens spécifiques utilisés.

Le dispositif de commande en inclinaison se compose de la pièce d'inclinaison 27 articulée à pivotement à l'extrémité de la tige du vérin, soit séparément, soit de façon confondue avec l'axe inférieur de pivotement 11.

La tête de guidage est équipée de moyens de roulement formés de deux galets 28 et 29 disposés en "V" à pointe dirigée vers le bas, montés sur deux supports porte-galet 30 et 31 articulés à pivotement entre eux autour d'un axe inférieur ou supérieur 32 ou 33 par rapport à la pièce d'inclinaison 27.

Selon la réalisation représentée, un des galets est fixe en inclinaison. Le rapprochement ou l'éloignement s'effectue par le mouvement d'un des galets par rapport à l'autre.

En position de travail, les galets sont en prise sur les épaulements d'un rail directeur 34 qu'ils enserrent par un léger pincement. Ils sont maintenus, par exemple dans cette position, par un verrouillage apporté par le vérin d'actionnement maintenu légèrement en charge ou par le jeu d'inclinaison à faible pente de la pièce d'inclinaison ou tout autre moyen.

Ils sont portés par deux supports porte-galet 30 et 31 de forme variable disposés de façon que la présentation des galets 28 et 29 soit en "V" à pointe dirigée vers le bas. Sur les faces extérieures de ces supports sont montés les axes de roulement des galets.

L'un des supports porte-galet ou les deux supports est ou sont actionné(s) en mouvements de libération ou de rapprochement des galets par le dispositif de commande et plus particulièrement par la pièce d'actionnement 27 qui est montée articulée sur l'extrémité de la tige du vérin d'actionnement 22.

Différentes formes techniques de la pièce d'inclinaison 27 sont possibles. La fonction générale consiste à provoquer le pivotement d'au moins un support porte-galet par le seul déplacement relatif de cette pièce par rapport à l'autre support.

Parmi les nombreuses variantes existantes pour la pièce d'inclinaison 27, on décrira ci-après deux formes de réalisation possibles : celle en coin et celle comportant une tige à extrémité conique.

Selon un premier mode de réalisation, les supports porte-galet 30 et 31 délimitent entre eux un volume récepteur pour la pièce d'inclinaison 27 dont le mouvement provoque l'actionnement en pivotement par rapport à leur axe commun de pivotement d'au moins un des deux supports porte-galet.

Selon ce premier mode de réalisation, la pièce d'inclinaison est un sabot 35 à extrémité avant 36 conformée en coin.

L'arrière de cette pièce d'actionnement présente une saillie sous la forme d'une platine latérale 37 par laquelle elle est articulée à l'extrémité de la tige du vérin. La partie basse 38 de cette pièce d'inclinaison de forme générale coudée est articulée à pivotement sur l'axe inférieur de pivotement 11. Dans le cas de la réalisation représentée, la face frontale de cette partie basse coudée sert de face de butée 39 contre un élément transversal pour permettre le basculement de relevage du bras.

Comme déjà indiqué, l'extrémité avant de la pièce d'inclinaison est réalisée en coin. Ce coin montre une surface latérale côté droit plane et verticale dans sa partie supérieure qui se prolonge vers le bas par un plan incliné 40 et une surface latérale gauche plane et inclinée 41 selon une pente appropriée. Les supports porte-galet 30 et 31 articulés entre eux à pivotement présentent chacun des faces latérales planes situées côté intérieur et disposées en regard. Le support de droite 30 est fixe en inclinaison et comporte une face latérale intérieure plane verticale puis inclinée alors que le support de gauche 31 est mobile en inclinaison par pivotement et présente une face latérale intérieure 42 plane et inclinée par exemple selon la même pente que la face latérale articulée 41 en regard de l'extrémité en coin 36.

Les faces latérales en regard côté intérieur délimitent un volume récepteur dont au moins une paroi latérale est mobile en inclinaison.

Elles sont utilisées à cet effet comme rampe de poussée par le sabot de commande 35 constituant ici la pièce d'inclinaison dont la forme convergente de ces plans d'extrémité permet de convertir son mouvement de descente et d'avance en mouvement d'écartement des faces des parois latérales du volume récepteur et ainsi en mouvement de rapprochement des galets jusqu'à contact de prise avec les épaulements du rail puis effet de pincement et autoverrouillage.

Il convient de préciser ici que l'autoverrouillage peut résulter de l'état du vérin d'actionnement qu'on laisse en charge en fin de course de poussée ou bien d'une pente appropriée plus faible de la pièce d'inclinaison en coin ou tout autre moyen.

Les figures 7, 8 et 9 permettent d'expliquer le fonctionnement général relatif aux mouvements du bras et des galets.

Le mouvement de relevage s'effectue en trois phases illustrées successivement par les figures ci-dessus qui peuvent être rapprochées des figures en coupe transversale.

Le bras est à l'état initial rabattu avec les galets en prise sur le rail c'est-à-dire en serrant le rail avec un léger effet de pincement.

Dans cet état, le sabot 35 est en butée sur le fond du volume récepteur et son extrémité avant formant pièce de commande en inclinaison des galets est abaissée sous l'action du vérin d'actionnement et reste verrouillée dans cette position par le maintien d'une force apportée par le vérin légèrement en charge ou autre moyen. La pièce de commande en inclinaison force le galet de gauche en contrainte de pincement sur le rail pour lui même et par réaction mécanique pour le galet opposé.

Le mouvement de relevage débute par la libération du galet. Cette libération à lieu par le simple basculement du sabot 35 en arrière autour de l'axe 11 sous l'effet du mouvement de traction du vérin. Au cours de ce mouvement, l'extrémité avant du sabot 35 remonte et libère ainsi le support porte-galet de gauche en mouvement.

Le mouvement de basculement arrière du sabot 35 marque un arrêt par le contact de la face avant de l'extrémité basse de la partie coudée contre la surface de butée en regard.

La poursuite par la continuation de la traction du vérin provoque la déformation de l'ensemble déformable 13 par rapprochement de la structure oblique inférieure 8 vers la partie supérieure du bras en même temps qu'une légère extension de celui-ci pour se retrouver dans la position représentée sur la figure 9 dans laquelle le bras est relevé et les galets libérés.

On a réalisé ainsi un mécanisme automatique de relevage et commande des galets en inclinaison actionné uniquement par le vérin qui commande les différentes fonctions et leur succession.

La traction du vérin provoque successivement et automatiquement la libération des galets et le soulèvement de l'ensemble.

Inversement, la poussée du vérin rabaisse l'ensemble et verrouille les galets en inclinaison de prise sur le rail directeur.

Selon le deuxième mode de réalisation représenté sur les figures 10 et 11, la pièce d'actionnement est une tige d'inclinaison 43 à extrémité conique dont le mouvement rectiligne d'avance ou de retrait est converti en mouvement d'écartement ou d'éloignement des supports porte-galet droit 44 et gauche 45.

Cette tige d'inclinaison 43 présente à environ mi-longueur une saillie diamétrale en collerette 46.

La tige d'inclinaison 43 est articulée à pivotement à l'extrémité de la tige du vérin d'actionnement par une chape 47 traversée par l'axe inférieur de pivotement 11.

Le bloc mécanique de liaison propre à cette variante, référencé 48, de l'ensemble articulé 13 sert toujours de support porte-galet 44 à inclinaison fixe. Il comporte sur son chant supérieur une articulation de pivotement 49 par laquelle le support porte-galet gauche 45 à inclinaison variable est articulé.

L'axe de pivotement 33 des porte-galets et donc des galets est déporté vers le haut au dessus de la pièce d'inclinaison 43 et le support porte-galet gauche 45 à inclinaison variable affecte une nouvelle forme technique du type pendulaire. L'exemple de réalisation représenté sur les figures 10 et 11 montre un bloc mécanique pivotant par le haut à face latérale extérieure oblique porte-galet et à extension supérieure traversée par l'axe de pivotement supérieur.

Le corps du support porte-galet de gauche 45 comporte un volume récepteur qui procède du même principe selon lequel une conversion de mouvement de translation en mouvements de pivotement s'opère par la coopération d'une rampe conique ou simplement inclinée avec un élément mobile de commande en contact de poussée en vue de réaliser le rapprochement des supports porte-galet 44 et 45 et leur libération dans le sens contraire.

La collerette 46 constitue une structure de butée entre les faces avant 50 et arrière 51 d'un logement supérieur 52 qui détermine la course de commande de la pièce d'actionnement. La traction supplémentaire du vérin d'actionnement provoque le relevage par basculement de l'ensemble articulé 13.

Les galets présentent un profil de gorge 53 imposant celui de l'épaulement 54 du rail directeur 34 qu'ils doivent suivre.

On peut, à cet effet, utiliser des profils de rail de forme triangulaire, ronde, en forme de coeur ou autre, dont la semelle 55 est montée sur un intercalaire insonorisant en fond de gorge 56 des éléments rectilignes préfabriqués du type caniveau 57 qui contiennent le rail.

La constitution de chacun des galets est identique. Il s'agit d'une structure composite formée d'un axe de roulement ou axe-fusée 58 solidaire de chaque support porte-galet et sur lequel est monté à rotation un moyeu 59 par l'intermédiaire d'un roulement 60.

Sur la gorge périphérique du moyeu 59 est montée une couronne de roulement 61 par l'intermédiaire d'une garniture 62 de jante 63 en matière élastique, par exemple en élastomère, formée de deux rondelles coniques 64 et 65 épaisses disposées en "V" servant d'élément intermédiaire déformable permettant d'absorber par sa déformation les légers déplacements dus aux jeux fonctionnels, mais aussi le déport latéral dans les courbes.

Ces couronnes en matière élastique assurent en plus un complément d'isolation aux vibrations et l'isolation électrique.

On a réalisé ainsi un ensemble de mise en prise de deux galets sur un rail qui est autoverrouillé par exemple par le maintien en charge du vérin d'actionnement ou par le jeu d'une rampe à faible pente pour la pièce d'inclinaison.

Les formes et les fonctions techniques permettent au vérin d'actionnement de libérer automatiquement l'écartement des galets lors de la première phase du mouvement de levage et le rapprochement puis le pincement en fin de mouvement d'abaissement.

Le support chasse-pierre 21 placé devant les galets pour les protéger est formé d'un bras incurvé 66 terminé par une platine transversale horizontale 67 disposée juste au-dessus du rail. Il s'agit d'un support faisant partie intégrante de l'ensemble articulé déformable. Il s'escamote avec lui par relevage de l'ensemble.

## Revendications

1. Bras relevable pour le guidage automatique d'un véhicule terrestre le long d'un rail directeur présentant en extrémité avant deux galets de guidage (28,29) inclinés en "V" à pointe dirigée vers le bas en prise chacun par leur gorge sur un des épaulements du rail directeur en vue de constituer un organe de pilotage directionnel formé d'un bras mobile (1) en liaison fonctionnelle avec l'ensemble directionnel du véhicule et articulé au châssis de celui-ci selon deux axes croisés, l'un vertical (6), l'autre horizontal (7), réunis en un centre d'articulation (3), ledit bras mobile relevable étant actionné en mouvements de levage et d'abaissement par un vérin d'actionnement (22) articulé entre le centre d'articulation (3) et une partie basse du corps du bras, ledit bras (1) présentant un moyen de support mobile sous l'effet du vérin d'actionnement (22), moyen comportant à son extrémité le couple des galets de guidage (28,29) portés par des supports porte-galet (30,31) et l'un au moins de ces galets (28,29) étant pivotant en inclinaison par rapport à l'autre, le bras relevable comportant un dispositif de commande en rapprochement des galets (28,29) et de libération de ceux-ci en écartement.

2. Bras selon la revendication 1 caractérisé en ce que le moyen de support mobile est une structure articulée en cadre déformable dans un même plan vertical sous l'effet du vérin d'actionnement (22) formé de trois branches articulées entre elles dont une branche inférieure, une branche d'extrémité et une branche supérieure, les branches inférieure et supérieure étant reliées à deux articulations porteuses de pivotement selon deux axes de pivotement horizontaux de hauteur constante au cours du mouvement de relevage, la branche d'extrémité comportant le couple des galets de guidage.

3. Bras selon la revendication 1 ou 2 caractérisé en ce que l'un des supports porte-galet (30,31) est fixe et l'autre mobile en inclinaison par rapport au support porte-galet adjacent sous l'effet d'une pièce d'inclinaison (27) actionnée par le vérin (22).

4. Bras selon la revendication 1 ou 2 caractérisé en ce que le dispositif de commande est actionné par le vérin (22).

5. Bras selon l'une quelconque des revendications précédentes caractérisé en ce que le support porte-galet (30) à inclinaison fixe est la branche d'extrémité de la structure articulée déformable.

6. Bras selon l'une des revendications précédentes caractérisé en ce que l'axe de pivotement des supports porte-galet (30,31) est situé en-dessous de la pièce d'inclinaison (27).

7. Bras selon la revendication 6 caractérisé en ce que la pièce d'inclinaison (27) est un sabot (35) basculant relié d'une part à la tige du vérin et d'autre part à l'axe inférieur de pivotement et dont l'extrémité actionne par un mouvement de descente au moins un des supports porte-galet (30,31) en inclinaison de rapprochement puis de pincement des galets (28,29) et libère par sa montée au moins un des supports porte-galet.

8. Bras selon la revendication 7 caractérisé en ce que l'extrémité (36) de la pièce d'inclinaison est conformée en coin dont une des rampes est inclinée et coopère avec la face arrière du support porte-galet (31) mobile en inclinaison pour provoquer le rapprochement des galets par son mouvement de descente et la libération de ceux-ci par sa montée.

9. Bras selon l'une des revendications précédentes caractérisé en ce que la pièce d'inclinaison (27) est maintenue verrouillée en position basse.

10. Bras selon la revendication 9 caractérisé en ce que le vérin reste en charge lorsque la pièce d'inclinaison (27) est en position basse de maintien des galets (28,29) en rapprochement.

11. Bras selon la revendication 9 caractérisé en ce que la rampe inclinée de la pièce d'inclinaison est de faible pente.

12. Bras selon l'une quelconques des revendications 1 à 5 caractérisé en ce que l'axe de pivotement des supports porte-galet est situé au-dessus de la pièce d'inclinaison (27).

13. Bras selon la revendication précédente caractérisé en ce que la pièce d'inclinaison (27) est articulée à l'axe de pivotement supérieur et est conformée selon une tige à extrémité conique dont la coupe est limitée par une butée avant et une butée arrière.

14. Bras selon la revendication 1 caractérisé en ce que les galets (28,29) sont formés d'une couronne de roulement (61) montée sur le moyeu par l'intermédiaire d'une garniture (62) de jante (63) en matière élastique et isolante.

15. Bras selon la revendication précédente caractérisé en ce que la garniture (62) de jante (63) présente un profil en "V"' tronqué réalisé par la juxtaposition de deux rondelles coniques.

## Claims

1. Raisable arm for automatically guiding a land vehicle along a guide rail and comprising at its front end two guide rollers (28, 29) which are inclined in a V shape with a downwardly directed point, each guide roller engaging via its groove on one of the shoulders of the guide rail so as to form a directional control member comprising a movable arm (1) which is operatively connected to the vehicle guiding assembly and is articulated on the vehicle chassis by two intersecting axles, one (6) vertical and the other (7) horizontal, the axles being assembled to form an articulation centre (3), the raisable movable arm being actuated for raising and lowering movements via an actuating cylinder (22) articulated between the articulation centre (3) and a bottom part of the arm body, the arm (1) having a support means which is movable under the effect of the actuating cylinder (22) and comprises at its end the pair of guide rollers (28, 29) carried by roller-carrier supports (30, 31), and at least one of these rollers (28, 29) swivelling in an inclined manner relative to the other, the raisable arm comprising a device controlling the rollers (28, 29) such that they move towards one another and releasing them such that they move apart.

2. Arm according to Claim 1, characterized in that the movable support means is a structure which is articulated to form a frame which can be deformed in a given vertical plane under the effect of the actuating cylinder (22) and is formed by three branches which are articulated relative to one another and comprise a lower branch, an end branch and an upper branch, the lower and upper branches being connected to two support articulations which swivel about two horizontal swivel pins of constant height during the raising movement, the end branch comprising the guide roller pair.

3. Arm according to Claim 1 or 2, characterized in that one of the roller-carrier supports (30, 31) is fixed and the other can move in an inclined manner relative to the adjacent roller-carrier support under the effect of an inclination part (27) actuated by the cylinder (22).

4. Arm according to Claim 1 or 2, characterized in that the control device is actuated by the cylinder (22).

5. Arm according to any one of the preceding claims, characterized in that the fixed-inclination roller-carrier support (30) is the end branch of the deformable articulated structure.

6. Arm according to any one of the preceding claims, characterized in that the swivel pin of the roller-carrier supports (30, 31) is located below the inclination part (27).

7. Arm according to Claim 6, characterized in that the inclination part (27) is a tilting shoe (35) which is connected on the one hand to the cylinder rod and on the other to the lower swivel pin and whose end, with a downward movement, actuates at least one of the inclined roller-carrier supports (30, 31) for moving together then squeezing the rollers (28, 29) and, as it rises, releases at least one of the roller-carrier supports.

8. Arm according to Claim 7, characterized in that the end (36) of the inclination part is shaped as a wedge of which one of the slopes is inclined and co-operates with the rear face of the roller-carrier support (31) which can move in inclined manner so as to cause the rollers to move together by its downward movement and release these rollers by its upward movement.

9. Arm according to any one of the preceding claims, characterized in that the inclination part (27) is held locked in the bottom position.

10. Arm according to Claim 9, characterized in that the cylinder remains under load when the inclination part (27) is in the bottom position holding the rollers (28, 29) close together.

11. Arm according to Claim 9, characterized in that the inclined slope of the inclination part is shallow.

12. Arm according to any one of Claims 1 to 5, characterized in that the roller-carrier support swivel pin is located above the inclination part (27).

13. Arm according to the preceding claim, characterized in that the inclination part (27) is articulated on the upper swivel pin and takes the form of rod with a conical end of which the cross-section is delimited by a front stop and a rear stop.

14. Arm according to Claim 1, characterized in that the rollers (28, 29) are formed by a bearing ring (61) mounted on the hub by means of a mounting (62) with a rim (63) made of resilient insulating material.

15. Arm according to the preceding claim, characterized in that the mounting (62) with a rim (63) has a truncated V-shaped profile formed by the juxtaposition of two conical washers.

## Patentansprüche

1. Anhebbarer Arm zur automatischen Führung eines Straßenfahrzeugs entlang einer Leitschiene, mit zwei geneigten Führungsrollen (28, 29) am vorderen Ende, die als ein nach unten spitz zulaufendes "V" jeweils über ihre Vertiefung mit einer der Schultern der Leitschiene in Eingriff stehen, um eine Einrichtung zur Richtungssteuerung zu bilden, die aus einem mit der Lenkeinheit des Fahrzeugs wirkverbundenen, beweglichen Arm (1) besteht und an dessen Chassis mittels zweier in einem Gelenkpunkt (3) zusammengeführter, sich kreuzender Achsen - die eine vertikal (6), die andere horizontal (7) - angelenkt ist, wobei der bewegliche, anhebbare Arm durch einen Betätigungszylinder (22), der zwischen dem Gelenkpunkt (3) und einem unteren Abschnitt des Armkörpers angelenkt ist, in Hub- und Senkbewegungen versetzt wird und eine unter der Wirkung des Betätigungszylinders (22) bewegliche Trägereinrichtung aufweist, die an ihrem Ende das Paar der Führungsrollen (28, 29) aufweist, die durch Rollenträgerhalterungen (30, 31) gehalten sind und wobei zumindest eine dieser Rollen (28, 29) in eine Schräglage gegenüber der anderen kippbar ist und der anhebbare Arm eine Einrichtung zur Führung bei Zusammendrücken der Rollen (28, 29) und zur Freisetzung bei Spreizen derselben aufweist.

2. Arm nach Anspruch 1, dadurch gekennzeichnet, daß die bewegliche Trägereinrichtung eine in einer vertikalen Ebene unter der Wirkung des Betätigungszylinders (22) verformbare Gelenk-Rahmenstruktur ist, die aus drei untereinander gelenkig verbundenen Schenkeln mit einem unteren Schenkel, einem äußeren Schenkel und einem oberen Schenkel gebildet ist, wobei der untere und der obere Schenkel über zwei tragende Schwenkgelenke mit zwei horizontalen Schwenkachsen konstanter Höhe während der Hubbewegung verbunden sind und der äußere Schenkel das Führungsrollenpaar trägt.

3. Arm nach Anspruch 1 oder 2, dadurch gekennzeichnet, daß eine der Rollenträgerhaltungen (30, 31) fest und die andere gegenüber der benachbarten Rollenträgerhalterung durch die Wirkung eines durch den Zylinder (22) betätigten Neigungsteils (27) neigbar ist.

4. Arm nach Anspruch 1 oder 2, dadurch gekennzeichnet, daß die Führungseinrichtung durch den Zylinder (22) betätigbar ist.

5. Arm nach einem der vorangehenden Ansprüche, dadurch gekennzeichnet, daß die Rollenträgerhaltung (30) mit fester Neigung der äußere Schenkel der verformbaren Gelenkstruktur ist.

6. Arm nach einem der vorangehenden Ansprüche, dadurch gekennzeichnet, daß die Schwenkachse der Rollenträgerhalterungen (30, 31) unterhalb des Neigungsteils (27) liegt.

7. Arm nach Anspruch 6, dadurch gekennzeichnet, daß das Neigungsteil (27) ein Kontaktschuh (35) ist, der einerseits mit der Kolbenstange und andererseits mit der unteren Schwenkachse schwenkbar verbunden ist und dessen Ende durch eine Absenkbewegung zumindest eine der Rollenträgerhalterungen (30, 31) durch Neigen, Annähern, dann durch Quetschen der Rollen (28, 29) betätigt und durch sein Anheben zumindest eine der Rollenträgerhalterungen freigibt.

8. Arm nach Anspruch 7, dadurch gekennzeichnet, daß das Ende (36) des Neigungsteils keilförmig ausgeführt ist, wobei eine seiner Seiten abgeschrägt ist und mit der Rückseite der in ihrer Neigung veränderbaren Rollenträgerhalterung (31) zusammenwirkt, um das Annähern der Rollen durch seine Abwärtsbewegung und deren Freistellung durch seine Aufwärtsbewegung zu bewirken.

9. Arm nach einem der vorangehenden Ansprüche, dadurch gekennzeichnet, daß das Neigungsteil (27) in seiner unteren Stellung verriegelt ist.

10. Arm nach Anspruch 9, dadurch gekennzeichnet, daß der Zylinder unter Last bleibt, wenn das Neigungsteil (27) in der unteren Stellung ist, um die Rollen (28, 29) in Annäherung zu halten.

11. Arm nach Anspruch 9, dadurch gekennzeichnet, daß die abgeschrägte Seite des Neigungsteils von geringer Neigung ist.

12. Arm nach einem der Ansprüche 1 bis 5, dadurch gekennzeichnet, daß die Schwenkachse der Rollenträgerhalterungen oberhalb des Neigungsteils (27) liegt.

13. Arm nach Anspruch 12, dadurch gekennzeichnet, daß das Neigungsteil (27) an der oberen Schwenkachse angelenkt und als Stange mit konischem Ende ausgeformt ist, deren Hub durch einen vorderen und einen hinteren Anschlag begrenzt ist.

14. Arm nach Anspruch 1, dadurch gekennzeichnet, daß die Rollen (28, 29) durch einen Laufkranz (61) gebildet sind, der mittels einer Ausfütterung (62) der Felge (63) aus elastischem und isolierendem Material an der Nabe festgelegt ist.

15. Arm nach Anspruch 14, dadurch gekennzeichnet, daß die Ausfütterung (62) der Felge (63) durch das Gegeneinanderstellen zweier Tellerfedern das Profil eines stumpfen "V" aufweist.
